# EUROPEAN PATENT APPLICATION

(11) **EP 4 600 528 A1**
(43) Date of publication of application: **13.08.2025**
(21) Application number: 23874924.6
(22) Date of filing: 04.10.2023
(51) Int. Cl.: F16H 25/22, F16H 25/24

(54) **BALL SCREW**

(30) Priority: 07.10.2022 JP 2022162549
(71) Applicant: NSK LTD., Tokyo 141-8560 (JP)
(72) Inventor: NONAKA Kota, Fujisawa-shi, Kanagawa 251-8501 (JP)
(74) Representative: Grünecker Patent- und Rechtsanwälte PartG mbB
(86) International application number: PCT/JP2023/036295
(87) International publication number: WO 2024/075799

(57) **Abstract**

A ball screw (10) comprises: a screw shaft (20) formed with a screw shaft-side raceway groove (21); a nut (30) formed with a nut-side raceway groove (31) and having a through-hole (32) communicating an outer peripheral surface (33) with the nut-side raceway groove (31); a plurality of balls (26) that roll on a load raceway (25); and a circulating part (40) that is attached to the through-hole (32) to form a ball returning path (48) for circulating the balls (26). The ball screw (10) has a sealing member (50) made of resin or rubber that seals at least a part of a gap between an inner peripheral surface of the through-hole (32) of the nut (30) and an outer peripheral surface of the circulating part (40). This makes it possible to prevent leakage of grease through the gap between the circulating part and the through-hole formed on the nut, and entry of external foreign matter through the gap.

## Description

### TECHNICAL FIELD

The present invention relates to a ball screw, and particularly to a ball screw capable of preventing grease leakage from inside of a nut and entry of a foreign matter from outside.

### BACKGROUND ART

In recent years, a ball screw for high-load driving having a ball of a large size of 0.5 inches to 1 inch has been used as a replacement for a hydraulic drive mechanism. On the other hand, in recent years, particularly in an injection shaft of an injection molding machine, there is a strong demand for increasing a driving speed and heat resistance of a ball screw due to a high cycle and an increase in injection molding speed.

Up to now, a demand for high-speed feeding has been met by a circulation component made of resin and having a three-dimensional ball return passage capable of scooping balls from a tangential direction of a load raceway. However, since the circulation component made of resin has limitations in terms of strength and heat resistance, in order to solve these problems, the circulation component is made of metal materials.

Patent Literatures 1 and 2 describe a method of manufacturing a U-shaped circulation component by press working. The U-shaped circulation component is stably attached by both ends thereof being inserted and fitted into circular holes provided in a nut. In particular, in Patent Literature 2, an O-ring groove is formed in the circular hole, and a gap between the circulation component and the hole is sealed with the O-ring to prevent leakage of grease from the gap.

### CITATION LIST

### PATENT LITERATURE

Patent Literature 1: JP2003-269564A
Patent Literature 2: JP2007-321886A

### SUMMARY OF INVENTION

### TECHNICAL PROBLEM

In Patent Literature 2, the gap between the circulation component and the hole is sealed with the O-ring to prevent leakage of grease from the gap, but additional processing is required for the nut, such as processing of the O-ring groove for attaching the O-ring to the nut, which may increase the cost.

In addition, when a scooping portion of the circulation component made of metal is formed along a tangential direction of a load raceway, the hole of the nut is not circular. In addition, due to restriction of the shape, an appropriate gap is required between the hole (through hole) of the nut and the circulation component, and there is a concern that grease may leak from the gap to contaminate the surroundings, or the service life may be shortened due to entry of a foreign matter from the gap.

The present invention has been made in view of the above-described problems, and an object thereof is to provide a ball screw capable of preventing grease from leaking from a gap between a circulation component and a through hole formed in a nut and preventing entry of a foreign matter from the gap.

### SOLUTION TO PROBLEM

The above object of the present invention is implemented by the following configuration.
[1] A ball screw including:
   a screw shaft having a spiral screw shaft-side raceway groove formed on an outer peripheral surface thereof;
   a nut having a nut-side raceway groove formed on an inner peripheral surface thereof, the nut-side raceway groove facing the screw shaft-side raceway groove, and provided with a through hole through which an outer peripheral surface thereof communicates with the nut-side raceway groove;
   a plurality of balls rolling on a load raceway formed by the screw shaft-side raceway groove and the nut-side raceway groove;
   a circulation component attached to the through hole and configured to form a ball return passage for circulating the balls rolling on the load raceway; and
   a sealing member made of resin or rubber and configured to seal at least a part of a gap between an inner peripheral surface of the through hole of the nut and an outer peripheral surface of the circulation component.

### ADVANTAGEOUS EFFECTS OF INVENTION

With the ball screw according to the present invention, it is possible to prevent grease from leaking from the gap between the circulation component and the through hole formed in the nut, and to prevent an external foreign matter from entering from the gap.

### BRIEF DESCRIPTION OF DRAWINGS

FIG. 1 is a plan view of a ball screw according to a first embodiment of the present invention.
FIG. 2 is an exploded perspective view of the ball screw illustrated in FIG. 1.
FIG. 3 is a perspective view of a sealing member illustrated in FIG. 2.
FIG. 4A is a top view of the sealing member illustrated in FIG. 3, FIG. 4B is a front view of the sealing member illustrated in FIG. 3, FIG. 4C is a bottom view of the sealing member illustrated in FIG. 3, FIG. 4D is a left side surface view of the sealing member illustrated in FIG. 3, FIG. 4E is a right side surface view of the sealing member illustrated in FIG. 3, and FIG. 4F is a rear view of the sealing member illustrated in FIG. 3.
FIG. 5 is a sectional view illustrating a positional relation among a load raceway on which a ball rolls, a scooping portion of a circulation component, and a through hole of a nut.
FIG. 6 is a plan view of a ball screw according to a second embodiment of the present invention.
FIG. 7 is an exploded perspective view of the ball screw illustrated in FIG. 6.
FIG. 8 is a perspective view of the sealing member illustrated in FIG. 7.
FIG. 9A is a top view of the sealing member illustrated in FIG. 8, FIG. 9B is a front view of the sealing member illustrated in FIG. 8, FIG. 9C is a bottom view of the sealing member illustrated in FIG. 8, FIG. 9D is a left side surface view of the sealing member illustrated in FIG. 8, FIG. 9E is a right side surface view of the sealing member illustrated in FIG. 8, and FIG. 9F is a rear view of the sealing member illustrated in FIG. 8.
FIG. 10 is a perspective view of a sealing member according to a first modification of the second embodiment in which a pair of sealing members are integrally formed.
FIG. 11 is a perspective view of a sealing member according to a second modification of the second embodiment in which a pair of sealing members are formed of two components each having a coupling portion.
FIG. 12A is a perspective view of a sealing member according to a third modification of the second embodiment, and FIG. 12B is a perspective view illustrating a state where the sealing member is assembled to a through hole of a nut.
FIG. 13A is a perspective view of a sealing member according to a fourth modification of the second embodiment, and FIG. 13B is a perspective view illustrating a state where the sealing member is assembled to a through hole of a nut.
FIG. 14A is a perspective view of a sealing member for a through hole of a nut according to a fifth modification of the second embodiment, and FIG. 14B is a perspective view illustrating a state where the sealing member is assembled to the through hole of the nut.
FIGS. 15A to 15C are perspective views of a sealing member according to a sixth modification of the second embodiment.
FIG. 16 is a view corresponding to FIG. 4B of a sealing member according to a modification of the present invention of which a side surface is formed in a tapered shape whose diameter gradually increases from a lower portion toward an upper portion.
FIG. 17 is a sectional view illustrating a positional relation among the scooping portion of the circulation component, the load raceway, and the through hole of the nut, which is different from the aspect of FIG. 5.
FIG. 18 is a perspective view illustrating a modification in which a shape of the through hole of the nut is changed in the aspect illustrated in FIG. 17.

### DESCRIPTION OF EMBODIMENTS

Hereinafter, embodiments of a ball screw according to the present invention will be described in detail with reference to the drawings.

### (First Embodiment)

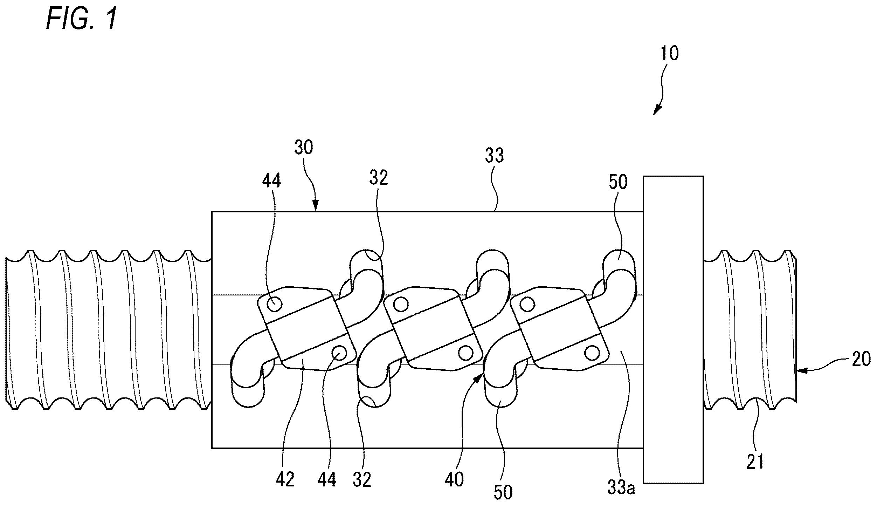

First, a ball screw according to a first embodiment will be described with reference to FIGS. 1 to 5.

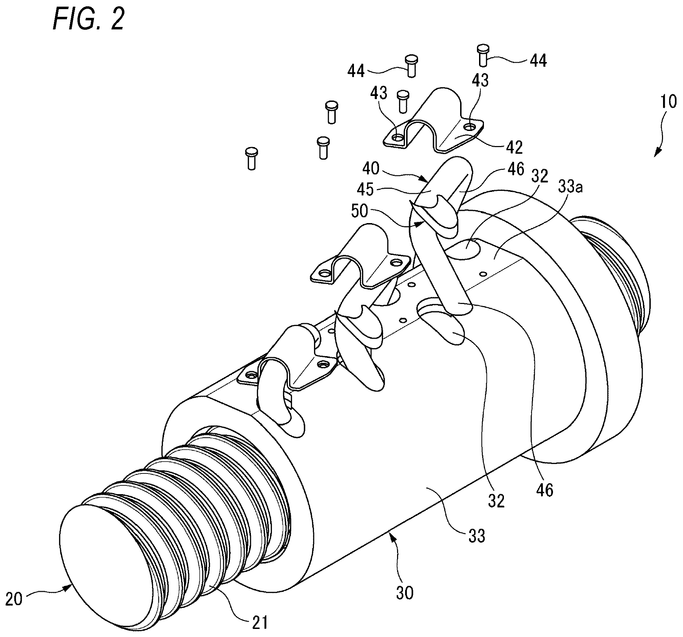

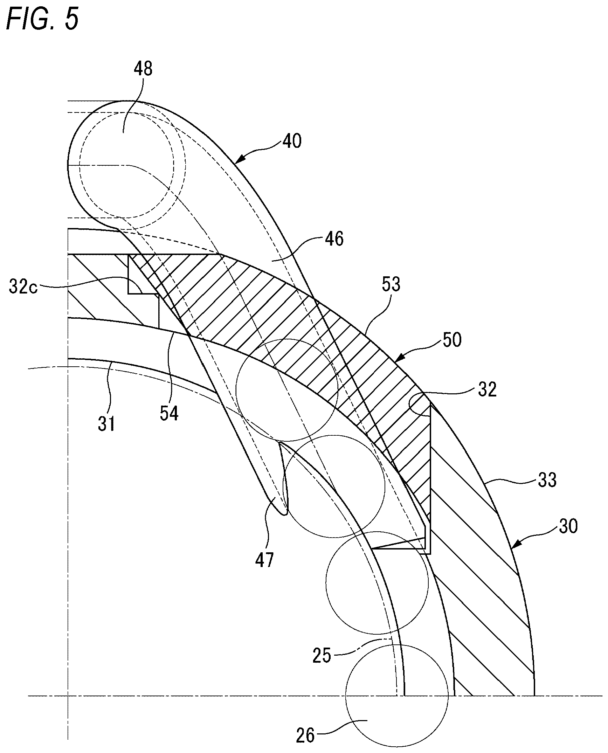

As illustrated in FIGS. 1 and 2, a ball screw 10 according to the present embodiment includes a screw shaft 20 having a spiral screw shaft-side raceway groove 21 formed on an outer peripheral surface thereof, a nut 30 having a spiral nut-side raceway groove 31 (see FIG. 5) formed on an inner peripheral surface thereof, the spiral nut-side raceway groove 31 facing the screw shaft-side raceway groove 21 of the screw shaft 20, and having, on an outer peripheral surface 33, a pair of through holes 32 communicating with the nut-side raceway groove 31, and a plurality of balls 26 rollably interposed on a load raceway 25 formed by the screw shaft-side raceway groove 21 of the screw shaft 20 and the nut-side raceway groove 31 of the nut 30. The ball screw 10 further includes a circulation component (return tube) 40 attached to the through hole 32 of the nut 30 and having a ball return passage 48 for circulating the balls 26 rolling on the load raceway 25, and a sealing member 50 for sealing a gap between the through hole 32 of the nut 30 and the circulation component 40.

The ball screw 10 according to the present embodiment includes three circulation components 40, but the number of the circulation component 40 may be set to any number according to the number of ball circulation passages.

Nut insertion portions 46, which are both ends of the circulation component 40, are inserted into the pair of through holes 32 formed by communicating the outer peripheral surface 33 of the nut 30 with the nut-side raceway groove 31. The circulation component 40 is fixed to the outer peripheral surface 33 of the nut 30 by a set screw 44 inserted into a screw hole 43 of a flanged U-shaped fastener 42.

The circulation component 40 is formed by bending a pipe member, and includes a straight portion parallel to a flat surface 33a formed on the outer peripheral surface 33 of the nut 30 when the circulation component 40 is attached to the nut 30, and the nut insertion portion 46 in which both ends of the straight portion 45 are bent so as to form a U shape when viewed from a lateral side and are twisted in opposite directions so as to form a Z shape when viewed from above. A scooping portion 47 (see FIG. 5) is provided at a distal end of each nut insertion portion 46.

Accordingly, when the circulation component 40 is attached to the nut 30, the scooping portion 47 is formed in a direction along a tangential direction of the load raceway 25. Accordingly, the circulation component 40 forms the ball return passage 48 that scoops up, by the scooping portion 47, the balls 26 rolling on the load raceway 25 from the tangential direction of the load raceway 25 and returns the balls 26 to other positions of the load raceway 25.

The circulation component 40 may be formed by bending a pipe member, but without being limited thereto, may be formed in a pipe shape by combining two components divided along a central axis of the circulation component 40.

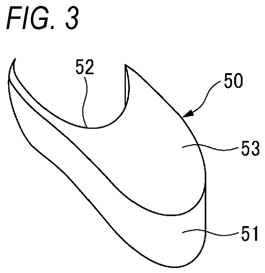

The sealing member 50 is a member that seals a gap between the through hole 32 of the nut 30 and the circulation component 40, and is formed of an elastic material such as resin or rubber. As illustrated in FIGS. 3 to 4F, the sealing member 50 has a substantially U-shaped outer peripheral surface 51 along a shape of an inner peripheral surface of the through hole 32 and a substantially C-shaped inner peripheral surface 52 along a shape of an outer peripheral surface of the circulation component 40.

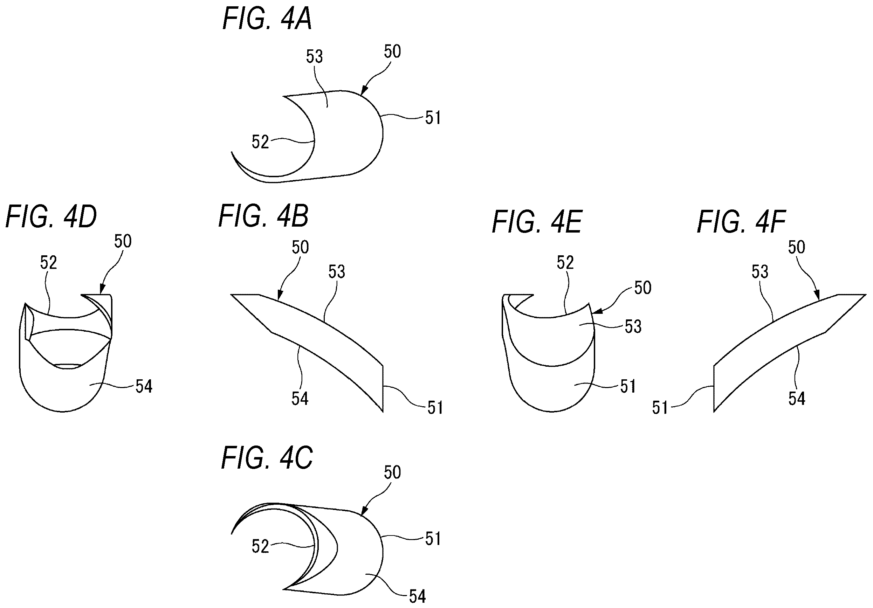

As illustrated in FIG. 4B and FIG. 5, an upper surface 53 and a lower surface 54 of the sealing member 50 are formed in an arc shape along the outer peripheral surface 33 and the inner peripheral surface of the nut 30 when the sealing member 50 is attached to the through hole 32 of the nut 30. Accordingly, the sealing member 50 does not protrude from the outer peripheral surface 33 of the nut 30 when being attached to the nut 30.

As illustrated in FIG. 5, in the circulation component 40, the sealing member 50 is attached to the gap between the through hole 32 of the nut 30 and the circulation component 40 from above after the nut insertion portion 46 is inserted into the through hole 32 in the tangential direction of the load raceway 25. Accordingly, the gap between the through hole 32 and the circulation component 40 is sealed to prevent grease leakage from the inside of the nut 30 and entry of foreign matters from the outside.

In particular, the sealing member 50 according to the present embodiment seals a side where the gap between the through hole 32 and the circulation component 40 is large (right side portion of nut insertion portion 46 in FIG. 5). The gap between the through hole 32 and the sealing member 50 and a gap between the sealing member 50 and the circulation component 40 are preferably 0.1 mm or less in order to prevent leakage of grease and entry of foreign matters from the outside. At least a part of the sealing member 50 may be formed slightly larger than the circulation component 40 and press-fitted into the circulation component 40.

A gap between an inner side surface of the nut insertion portion 46 of the circulation component 40 (left side surface of nut insertion portion 46 in FIG. 5) and a side surface of the through hole 32 does not need to be covered with the sealing member 50 as long as the gap is a predetermined gap, for example, 0.1 mm or less, and the shape of the sealing member 50 may be deformed so as to also cover the inside of the circulation component 40 (left side portion of nut insertion portion 46 in FIG. 5), or another sealing member may be disposed.

Since the sealing member 50 is formed of an elastic material such as resin or rubber, it is possible to easily absorb a processing error of the through hole 32 or a dimensional error of the press-molded circulation component 40, and it is possible to attach the sealing member 50 to the through hole 32 without a gap. When used at a high temperature, the gap between the through hole 32 and the circulation component 40 is further reduced due to thermal expansion of resin, rubber, or the like.

Since the scooping portion 47 is attached in the tangential direction of the load raceway 25, the ball 26 rolling on the load raceway 25 can be smoothly introduced into the ball return passage 48, and high-speed feeding can be performed by operating the scooping portion 47 at a high speed without any trouble.

Since both the nut 30 and the circulation component 40 are made of metal, the heat resistance is improved, and thus the driving speed of the ball screw 10 can be improved.

### (Second Embodiment)

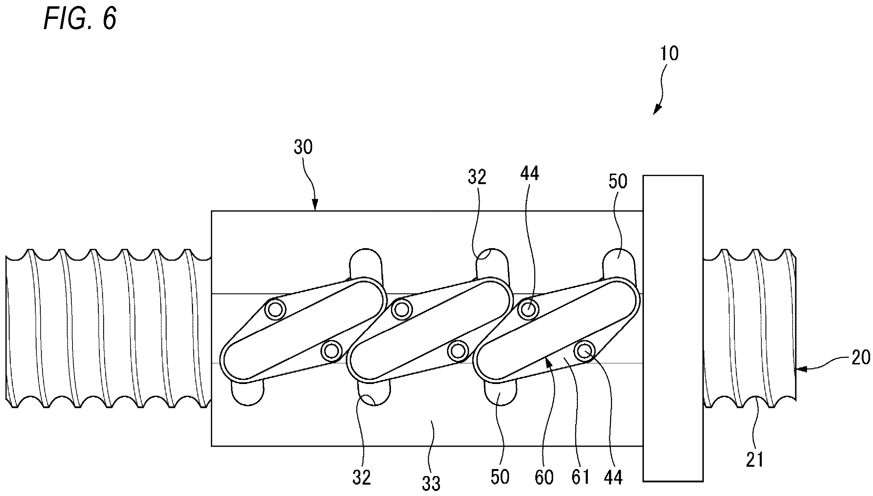

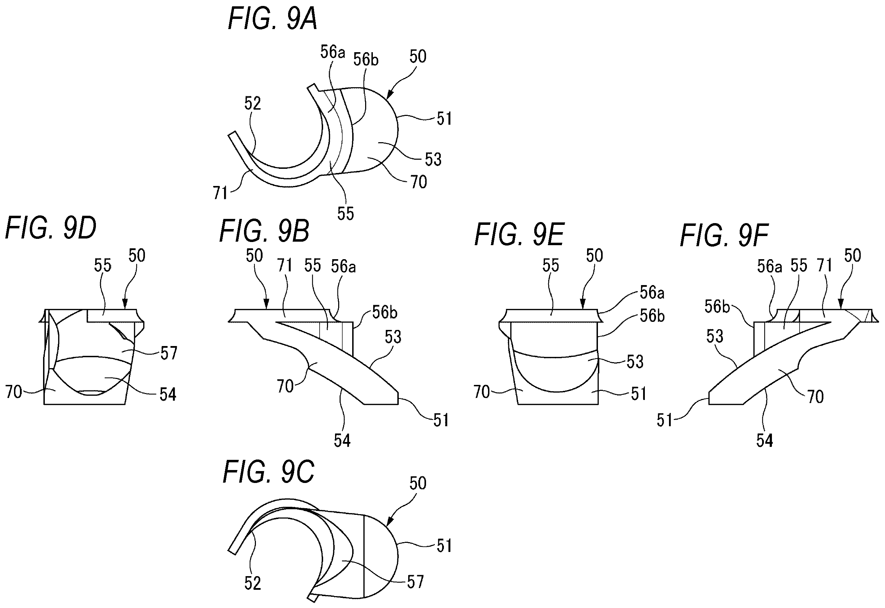

Next, a ball screw according to a second embodiment of the present invention will be described with reference to FIGS. 6 to 9F.

The ball screw according to the present embodiment is different from that of the first embodiment in that the shape of the sealing member is different from that of the first embodiment, and the sealing member and the circulation component are simultaneously fixed to the nut by a cap member. In the following, the same parts as those in the first embodiment are denoted by the same or corresponding reference numerals, and the description thereof will be simplified or omitted.

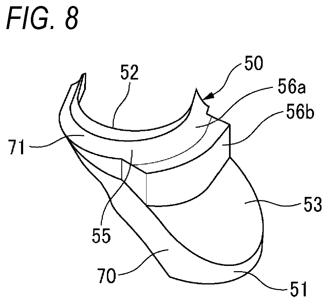

As illustrated in FIGS. 8 to 9F, in the sealing member 50 according to the present embodiment, a substantially semicircular projection 55 is further formed on the upper surface 53 of the sealing member 50 to protrude outward from the main body 70 with respect to the main body 70 to be fitted into the through hole 32 of the nut 30 below a portion along the upper surface 53 of the sealing member 50. Abutment portions 56a and 56b that abut against a cap member 60 are formed on a side surface and an upper surface of the substantially semicircular projection 55, and a groove 57 that covers a bent portion 49 between the straight portion 45 and the nut insertion portion 46 of the circulation component 40 is provided on a back surface of the projection 55.

The cap member 60 includes a groove (not illustrated) having a substantially U-shaped cross section and covering the straight portion 45 of the circulation component 40 and the bent portions 49 on both sides of the straight portion 45 in a longitudinal direction, and a flange 61 in which two screw holes 43 are formed.

In the circulation component 40 formed in this way, the sealing member 50 is attached to the gap between the through hole 32 of the nut 30 and the circulation component 40 from above after the nut insertion portion 46 is inserted into the through hole 32 in the tangential direction of the load raceway 25. At this time, the bent portion 49 of the circulation component 40 is attached so as to be covered by the groove 57 of the sealing member 50.

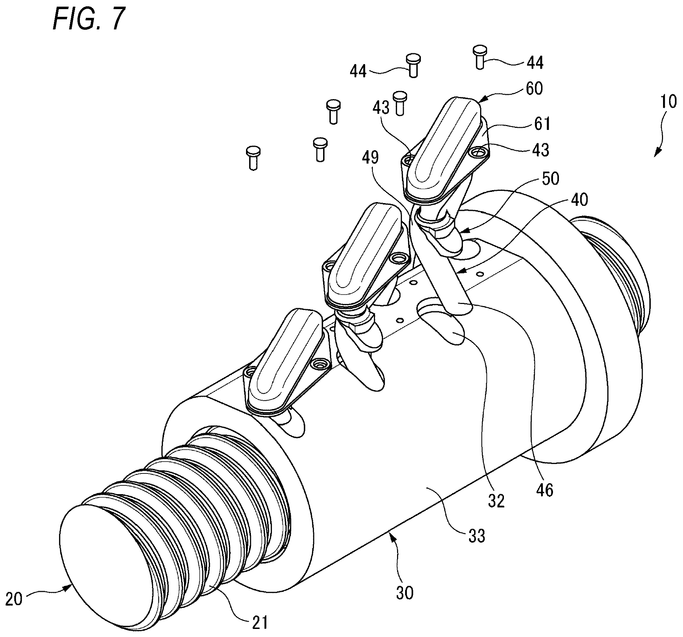

Next, as illustrated in FIGS. 6 and 7, the cap member 60 is covered so as to cover the circulation component 40 and the sealing member 50, and is fixed to the outer peripheral surface 33 of the nut 30 by the set screw 44 inserted into the screw hole 43. At this time, the cap member 60 abuts against the abutment portion 56 formed on the side surface and the upper surface of the sealing member 50 to fix the sealing member 50 together with the circulation component 40.

Therefore, it is natural that in the circulation component 40, the sealing member 50 does not fall off from the through hole 32 of the nut 30. Further, it is possible to easily prevent attachment failure of the circulation component 40 and the sealing member 50. It is preferable that in terms of appearance, the groove 57 does not protrude from the outer shape of the cap member 60 when viewed from above.

Other configurations and operations are similar as the ball screw according to the first embodiment.

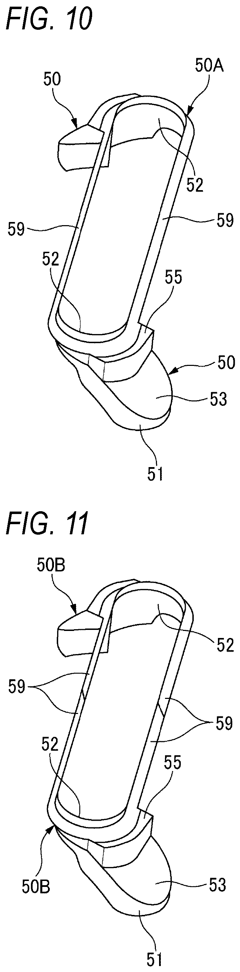

In the present embodiment, the pair of sealing members 50 as a pair of sealing portions may be continuous to each other by a coupling portion 59 to integrally form a sealing member 50A, as illustrated in FIG. 10. An outer side surface of the coupling portion 59 is curved so as to be continuous from the abutment portion 56 formed on the upper surface of the pair of sealing portions 50, and a lower surface of the coupling portion 59 abuts against the flat surface 33a of the nut 30.

That is, when the sealing member 50A according to the present modification is fixed to the nut 30 by the cap member 60, not only the pair of through holes 32 but also a space between the cap member 60 and the flat surface 33a of the nut 30 is sealed by the coupling portion 59. Accordingly, there is no place where metals come into contact with each other outside the nut 30, and all the metals come into contact with the resin or the rubber with a smaller gap.

Therefore, it is possible not only to facilitate the assembly of the sealing member 50A but also to effectively prevent the grease leaking from the circulation component 40 into the cap member 60 from flowing out.

As illustrated in FIG. 11, the shape as illustrated in FIG. 10 may be obtained by dividing the pair of coupling portions 59 and combining a pair of sealing members 50B having the same shape and each including the coupling portion 59.

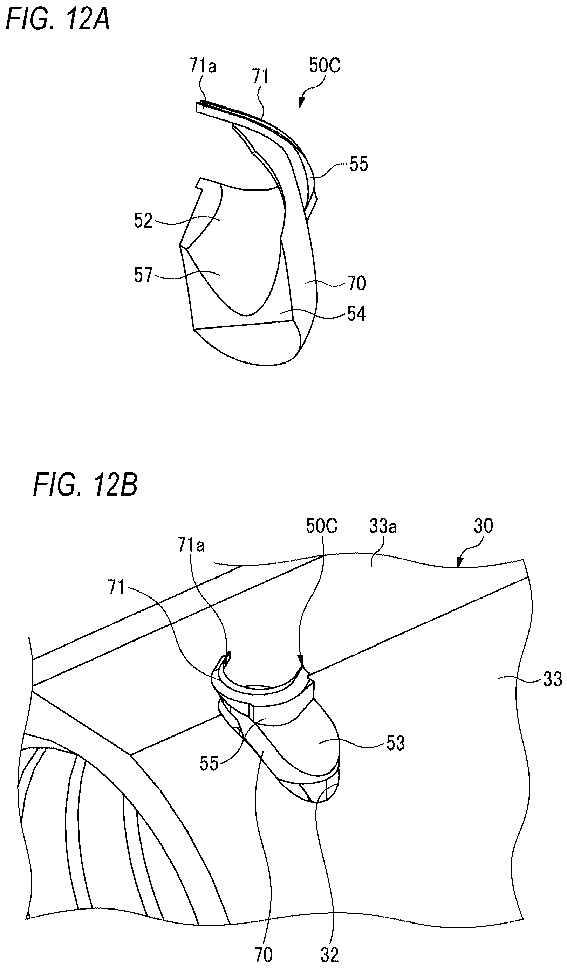

Further, as illustrated in FIG. 12A and FIG. 12B, in a sealing member 50C, an end 71a of an upper edge 71 of the projection 55 extends to the outside of an opening edge of the through hole 32, so that a lower surface of the end 71a abuts against the outer peripheral surface 33 of the nut 30. Accordingly, it is possible to prevent abrasion of the sealing member 50C caused by vibration due to contact with the circulation component 40 caused by the sealing member 50C excessively entering the nut 30, and to prevent deterioration of grease leakage resistance.

The shape of the upper edge 71 of the sealing member 50C may be such that the lower surface of the end portion 71a abuts against a surface of a notch formed around the opening edge of the through hole 32 of the nut 30 (for example, surface 32c of notch in FIG. 5). Therefore, in the sealing member 50 as in the first embodiment, the lower surface of the upper edge of the sealing member 50 also abuts against the surface 32c of the notch, so that the sealing member 50 can be prevented from excessively entering the nut 30.

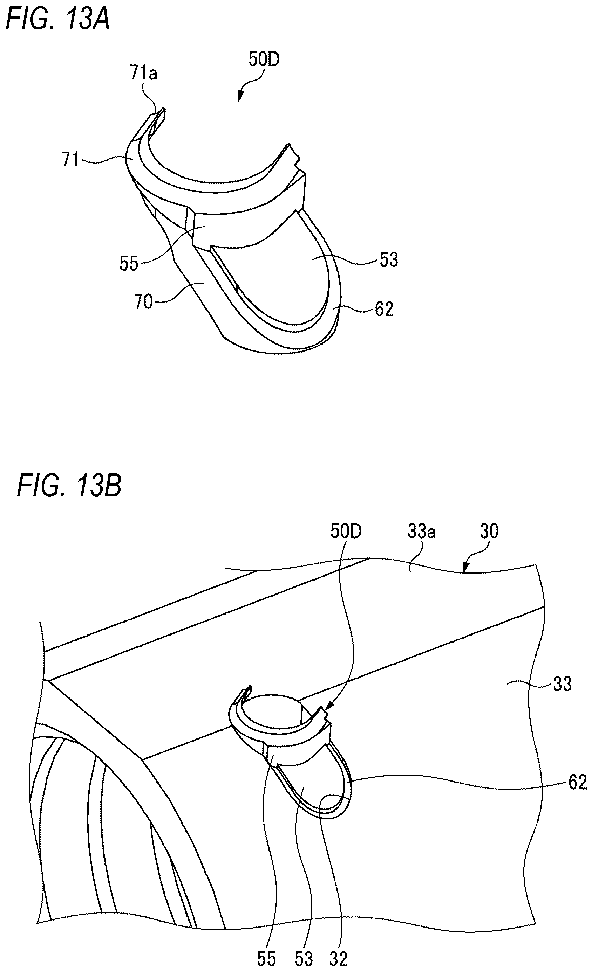

As illustrated in FIG. 13A, a sealing member 50D may have a notch 62 formed in a peripheral edge between the upper surface 53 and the outer peripheral surface 51 in contact with an inner surface of the through hole 32 of the nut 30. Accordingly, as illustrated in FIG. 13B, when the sealing member 50D is inserted into the through hole 32 of the nut 30, a groove is formed by the inner surface of the through hole 32 and the notch 62 of the sealing member 50D. By applying or pouring clay, silicone, a caulking material, or the like as a sealing material (not illustrated) into the groove, adhesion between the sealing member 50D and the through hole 32 can be further improved, and grease leakage can be further reduced.

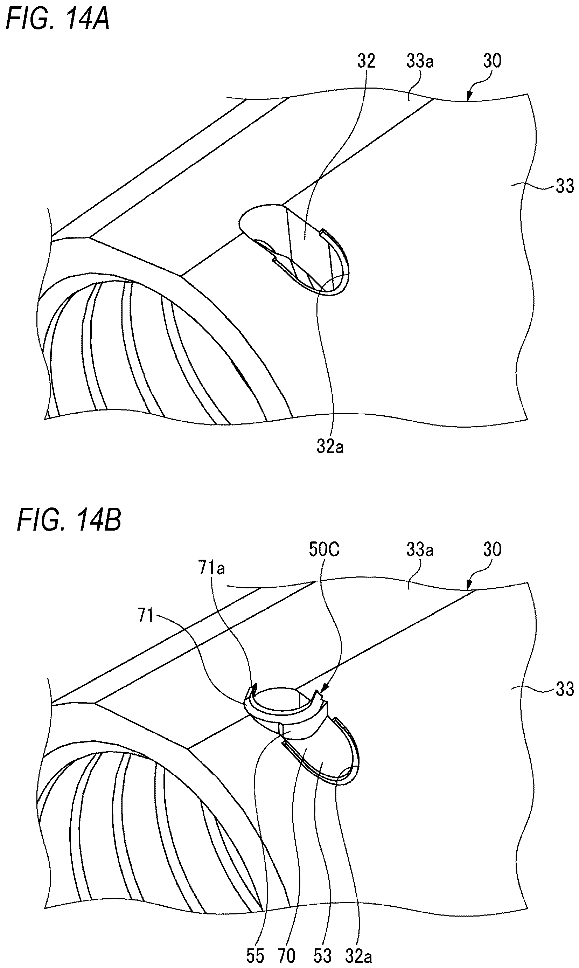

As illustrated in FIG. 14A and FIG. 14B, a notch 32a is formed along the opening edge of the through hole 32 of the nut 30, and a groove is formed between the notch 32a and the outer peripheral surface 51 of the sealing member 50C. In this case, sealing can also be performed by pouring a sealing material into the groove, which makes it difficult for the grease to leak.

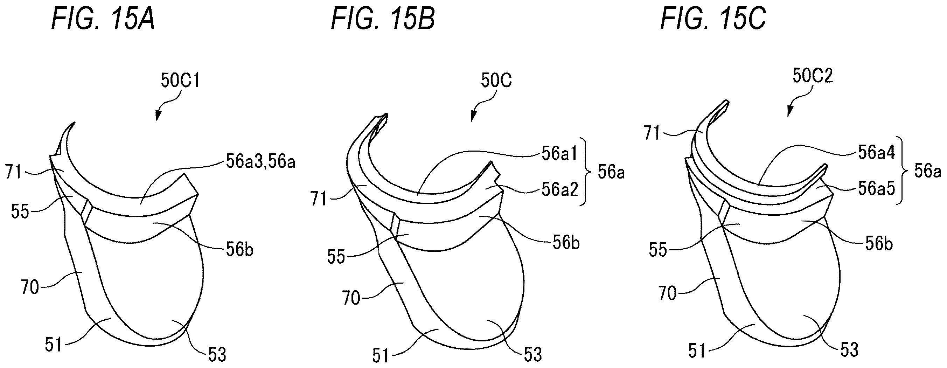

The abutment portion 56a of the sealing member 50C with the cap member 60 may be implemented such that a contact area with the inner surface of the cap member 60 is increased by a combination of a flat upper surface 56a2 and a curved surface 56a1 conforming to a curved chamfered shape of the inner surface of the cap member 60 as illustrated in FIG. 15B, which make it difficult for the grease to leak.

On the other hand, the abutment portion 56a may be implemented by a flat upper surface 56a3 so as to be in part contact with a bottom surface of the cap member 60, as in the sealing member 50C1 illustrated in FIG. 15A. In addition, in accordance with the shape of the inner surface of the cap member 60, the abutment portion 56a may be a combination of a stepped surface 56a4 and a flat upper surface 56a5 to increase the contact area with the inner surface of the cap member 60, as in the sealing member 50C2 illustrated in FIG. 15C.

The present invention is not limited to the above-described embodiments and examples, and modifications, improvements, and the like can be appropriately made.

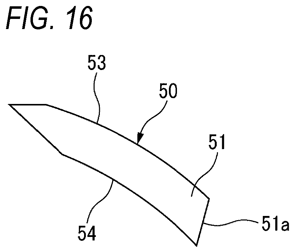

For example, in the sealing member 50, a size of an upper portion of the substantially U-shaped outer peripheral surface 51 is larger than a size of a lower portion, as illustrated in FIG. 16. In other words, the side surface 51a of the substantially U-shaped outer peripheral surface 51 is formed in a tapered shape whose diameter gradually increases from the lower portion toward the upper portion.

Therefore, when the sealing member 50 is attached to the through hole 32 of the nut 30, the gap between the through hole 32 and the sealing member 50 becomes smaller as the sealing member 50 is inserted into the through hole 32, so that leakage of grease can be further suppressed. Further, the displacement of the sealing member 50 can be prevented.

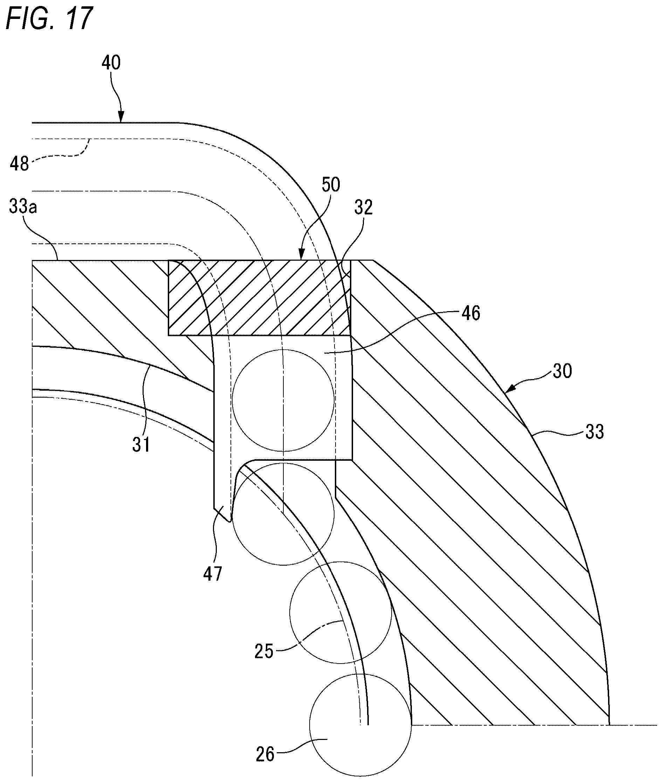

In addition, even in the case of a circulation component and a load raceway in which the scooping portion is not oriented in the tangential direction of the load raceway as illustrated in FIG. 17, the sealing member 50 is inserted into the gap between the through hole 32 of the nut 30 and the circulation component 40 to seal the gap, so that leakage of grease can be prevented.

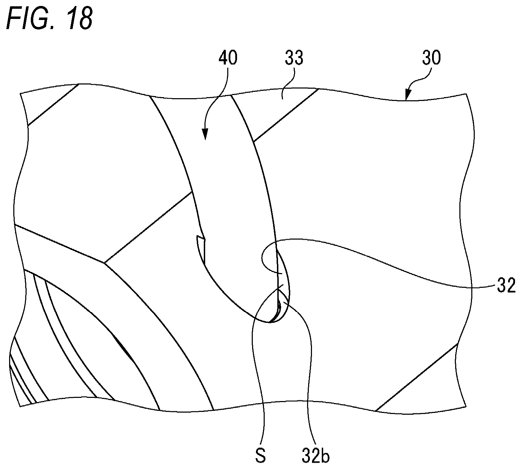

Further, since the tangent scooping type circulation component 40 is obliquely inserted into the through hole 32 of the nut 30, a gap for filling the sealing member 50 can be formed, but in the case of a tube-type circulation component illustrated in FIG. 17, the shape of the through hole 32 of the corresponding nut 30 may not sufficiently secure a space for mounting the sealing member. Therefore, a space S in which the sealing member 50 is fitted may be provided in the through hole 32, as illustrated in FIG. 18. Accordingly, when the gap between the metal circulation component 40 and the through hole 32 of the nut 30 is large and the grease easily leaks, the space S in which the sealing member 50 is fitted is provided to block the leaking grease by the sealing member 50, so that the grease leakage can also be reduced.

In addition, since a bottom surface of the space S forms an abutting surface 32b of the sealing member 50 and the through hole 32 is formed in a stepped shape, the sealing member 50 is prevented from excessively entering the through hole 32, and the abutting surface 32b and the sealing member 50 come into contact with each other, so that grease leakage can be reduced.

Further, in the above embodiments, the circulation component is made of metal, but without being limited thereto, may be made of resin.

As described above, the following matters are disclosed in the present description.
(1) A ball screw including:
   a screw shaft having a spiral screw shaft-side raceway groove formed on an outer peripheral surface thereof;
   a nut having a nut-side raceway groove formed on an inner peripheral surface thereof, the nut-side raceway groove facing the screw shaft-side raceway groove, and provided with a through hole through which an outer peripheral surface thereof communicates with the nut-side raceway groove;
   a plurality of balls rolling on a load raceway formed by the screw shaft-side raceway groove and the nut-side raceway groove;
   a circulation component attached to the through hole and configured to form a ball return passage for circulating the balls rolling on the load raceway; and
   a sealing member made of resin or rubber and configured to seal at least a part of a gap between an inner peripheral surface of the through hole of the nut and an outer peripheral surface of the circulation component.
   With this configuration, it is possible to prevent grease from leaking from the gap between the circulation component and the through hole formed in the nut, and to prevent a foreign matter from entering from the gap.
(2) The ball screw according to (1), in which
   the sealing member includes an abutment portion configured to abut against a cap member for fixing the circulation component to the nut to cover the circulation component.
   With this configuration, the sealing member can be fixed, by the cap member, to the nut together with the circulation component, and the sealing member can be prevented from falling off from the through hole.
(3) The ball screw according to (2), in which
   the sealing member includes a main body to be fitted into the through hole of the nut, and a projection protruding outward from the main body and having the abutment portion.
   With this configuration, the sealing member can be fixed, by the cap member, to the nut together with the circulation component, and the sealing member can be prevented from falling off from the through hole.
(4) The ball screw according to (3), in which
   the projection of the sealing member has an upper edge whose lower surface abuts against the outer peripheral surface of the nut.
   With this configuration, the sealing member can be prevented from excessively entering the nut.
(5) The ball screw according to (1), in which
   the sealing member has an upper edge whose lower surface abuts against a surface of a notch formed at an opening edge of the through hole of the nut.
(6) The ball screw according to any of (1) to (5), in which
   the sealing member has a notch formed at an edge between an upper surface and an outer peripheral surface to be fitted into the through hole of the nut, and
   the notch forms a groove together with an inner surface of the through hole.
   With this configuration, sealing can be performed by pouring a caulking material into the groove, which makes it difficult for the grease to leak.
(7) The ball screw according to any of (1) to (5), in which
   the outer peripheral surface of the nut has a notch formed along an opening edge of the through hole, and
   the notch forms a groove together with an outer peripheral surface of the sealing member.
   With this configuration, sealing can be performed by pouring a caulking material into the groove, which makes it difficult for the grease to leak.
(8) The ball screw according to any of (1) to (7), in which
   the through hole of the nut is formed in a stepped shape having an abutting surface against which a lower surface of the sealing member abuts.
   With this configuration, the sealing member can be prevented from excessively entering the nut.
(9) The ball screw according to any of (1) to (8), in which
   when the sealing member is attached to the nut, a side surface of the sealing member is formed in a tapered shape whose diameter gradually increases from a lower portion toward an upper portion.
   With this configuration, the gap between the through hole and the sealing member becomes smaller as the sealing member is pushed into the through hole, so that leakage of grease can be further suppressed.
(10) The ball screw according to any of (1) to (9), in which
   the circulation component includes, at both ends thereof, a scooping portion configured to scoop the balls from the load raceway, and each of the scooping portions is formed along a tangential direction of the load raceway.

With this configuration, the balls rolling on the load raceway can be scooped up more smoothly by the scooping portion, and high-speed operation becomes possible.

The present application is based on a Japanese patent application (No. 2022-162549) filed on October 7, 2022, contents of which are incorporated herein by reference.

### REFERENCE SIGNS LIST

10: ball screw
20: screw shaft
21: screw shaft-side raceway groove
25: load raceway
26: ball
30: nut
31: nut-side raceway groove
32: through hole
33: outer peripheral surface
40: circulation component
47: scooping portion
48: ball return passage
50, 50A: sealing member
51a: side surface (side surface of sealing member)
56: abutment portion
60: cap member

## Claims

1. A ball screw comprising:
a screw shaft having a spiral screw shaft-side raceway groove formed on an outer peripheral surface thereof;
a nut having a nut-side raceway groove formed on an inner peripheral surface thereof, the nut-side raceway groove facing the screw shaft-side raceway groove, and provided with a through hole through which an outer peripheral surface thereof communicates with the nut-side raceway groove;
a plurality of balls rolling on a load raceway formed by the screw shaft-side raceway groove and the nut-side raceway groove;
a circulation component attached to the through hole and configured to form a ball return passage for circulating the balls rolling on the load raceway; and
a sealing member made of resin or rubber and configured to seal at least a part of a gap between an inner peripheral surface of the through hole of the nut and an outer peripheral surface of the circulation component.

2. The ball screw according to claim 1, wherein
the sealing member includes an abutment portion configured to abut against a cap member for fixing the circulation component to the nut to cover the circulation component.

3. The ball screw according to claim 2, wherein
the sealing member includes a main body to be fitted into the through hole of the nut, and a projection protruding outward from the main body and having the abutment portion.

4. The ball screw according to claim 3, wherein
the projection of the sealing member has an upper edge whose lower surface abuts against the outer peripheral surface of the nut or a surface of a notch formed at an opening edge of the through hole of the nut.

5. The ball screw according to claim 1, wherein
the sealing member has an upper edge whose lower surface abuts against a surface of a notch formed at an opening edge of the through hole of the nut.

6. The ball screw according to claim 1, wherein
the sealing member has a notch formed at an edge between an upper surface and an outer peripheral surface to be fitted into the through hole of the nut, and
the notch forms a groove together with an inner surface of the through hole.

7. The ball screw according to claim 1, wherein
the outer peripheral surface of the nut has a notch formed along an opening edge of the through hole, and
the notch forms a groove together with an outer peripheral surface of the sealing member.

8. The ball screw according to claim 1, wherein
the through hole of the nut is formed in a stepped shape having an abutting surface against which a lower surface of the sealing member abuts.

9. The ball screw according to claim 1 or 2, wherein
when the sealing member is attached to the nut, a side surface of the sealing member is formed in a tapered shape whose diameter gradually increases from a lower portion toward an upper portion.

10. The ball screw according to claim 1, wherein
the circulation component includes, at both ends thereof, a scooping portion configured to scoop the balls from the load raceway, and each of the scooping portions is formed along a tangential direction of the load raceway.
